# EUROPEAN PATENT SPECIFICATION

(11) **EP 4 220 791 B1**
(45) Date of publication and mention of the grant of the patent: **02.07.2025**
(21) Application number: 22213644.2
(22) Date of filing: 14.12.2022
(51) Int. Cl.: H01M 10/04, H01M 10/48, H01M 10/42, H01M 50/244, H01M 50/251

(54) **ELECTRIC STORAGE DEVICE**
ELEKTRISCHE SPEICHERVORRICHTUNG
DISPOSITIF DE STOCKAGE ÉLECTRIQUE

(30) Priority: 01.02.2022 JP 2022014369
(43) Date of publication of application: 02.08.2023
(73) Proprietor: Suzuki Motor Corporation, Hamamatsu-shi, Shizuoka 432-8611 (JP)
(72) Inventor: MITSUOKA, Shigehi, Hamamatsu-shi, 432-8611 (JP); SUZUKI, Takafumi, Hamamatsu-shi, 432-8611 (JP); FURUKI, Kazushi, Hamamatsu-shi, 432-8611 (JP); HIGASHI, Naoki, Hamamatsu-shi, 432-8611 (JP)
(74) Representative: Plasseraud IP

(56) References cited:
- CN-A- 111 525 069
- CN-U- 204 648 038
- CN-U- 206 422 112
- KR-A- 20120 117 477
- HUTT ROSAMOND: "This Dutch football stadium creates its own energy and stores it in electric car batteries | World Economic Forum", 6 July 2018 (2018-07-06), pages 1 - 13, XP093056253, Retrieved from the Internet <URL:https://www.weforum.org/agenda/2018/07/netherlands-football-johan-cruijff-stadium-electric-car-batteries/> [retrieved on 20230621]
- HUTT ROSAMOND: "This Dutch football stadium creates its own energy and stores it in electric car batteries | World Economic Forum", 6 July 2018 (2018-07-06), pages 1 - 13, XP093056253, Retrieved from the Internet <URL:https://www.weforum.org/agenda/2018/07/netherlands-football-johan-cruijff-stadium-electric-car-batteries/> [retrieved on 20230621]

## Description

### [Technical Field]

The present invention relates to an electric storage device.

### [Background Art]

In recent years, efforts have been made to reuse battery packs that had been mounted on a vehicle. Since there is a problem that such efforts are unprofitable when the battery pack is dismantled into cells and modules, the battery pack is reused as it is.

However, a battery pack using small lithium ion batteries has a small battery capacity, and therefore cannot be used as it is for household power. Against this background, one reuse application of a battery pack using small lithium ion batteries is a streetlight electric storage device. Further, the streetlight may be a solar-type streetlight (hereinafter referred to as a "solar streetlight").

Performance such as capacity and internal resistance of a battery pack collected from the market is deteriorated as compared to a new battery pack, and performance varies among battery packs. In consideration of such circumstances, it is necessary to increase the capacity by combining a plurality of battery packs when reusing battery packs.

WO2017/029715 discloses a storage battery control device aimed to, when an anomaly occurs due to a disaster such as an earthquake, a tsunami, wind and flood damage, or fire, discharge electricity stored in a storage battery and reduce the possibility of a secondary disaster compared with prior art. The storage battery control device includes an electricity control unit that, when it is determined that an anomaly has occurred on the basis of a signal received from an anomaly detection unit, causes an electricity consumption unit to consume electricity stored in the storage battery and lowers the electricity amount of the storage battery to equal to or less than a set charge amount.

WO2017/029715 discloses that the anomaly detection unit is an immersion sensor that detects presence or absence of water immersion. According to such a configuration, the storage battery control device described in WO2017/029715 can detect anomaly due to water immersion, and can discharge the storage battery before an electricity storage system is damaged by water immersion.

### [Citation List]

### [Patent Literature]

[Patent Literature 1] WO2017/029715

### [Summary of Invention]

### [Technical Problem]

However, the storage battery control device described in WO2017/029715 has a problem that information on water immersion (hereinafter referred to as "immersion information") cannot be recognized outside the electricity storage system.

The present invention has been made in view of the foregoing, and aims to provide an electric storage device that can give notification of immersion information to the outside.

### [Solution to Problem]

In order to achieve the above objective, the present invention is an electric storage device as defined in the appended independent claim 1.

### [Advantageous Effect of Invention]

According to the present invention, it is possible to provide an electric storage device that can give notification of immersion information to the outside.

### [Brief Description of Drawings]

[Figure 1] Figure 1 is a schematic configuration diagram of a solar streetlight according to an example of the present invention, where (a) is a front view and (b) is a left side view.
[Figure 2] Figure 2 is a schematic configuration diagram of a battery pack of the solar streetlight according to the example of the present invention.
[Figure 3] Figure 3 is a block diagram illustrating a configuration of a control device of the solar streetlight according to the example of the present invention.
[Figure 4] Figure 4 is a block diagram illustrating an outline of electrical connection of the solar streetlight according to the example of the present invention.

### [Description of Embodiment]

An electric storage device according to an embodiment of the present invention is characterized by including: a plurality of battery packs capable of supplying electricity to a predetermined load, and installed to align in an up-down direction inside a columnar member; a control device that is arranged above the battery packs and controls the battery packs; a submersion sensor provided in each of the plurality of battery packs; and a notification unit that gives notification of information regarding immersion to the outside, in which the control device includes a communication unit that receives information indicating submersion from the submersion sensor in each battery pack, a determination unit that determines a degree of immersion on a basis of which of the submersion sensors having transmitted the received information indicating submersion, and a control unit that controls the notification unit to give notification of immersion degree information indicating the degree of immersion determined by the determination unit to the outside. With this configuration, the electric storage device according to the embodiment of the present invention can give notification of immersion information to the outside.

### [Embodiment]

Hereinafter, an electric storage device according to an example of the present invention will be described with reference to the drawings.

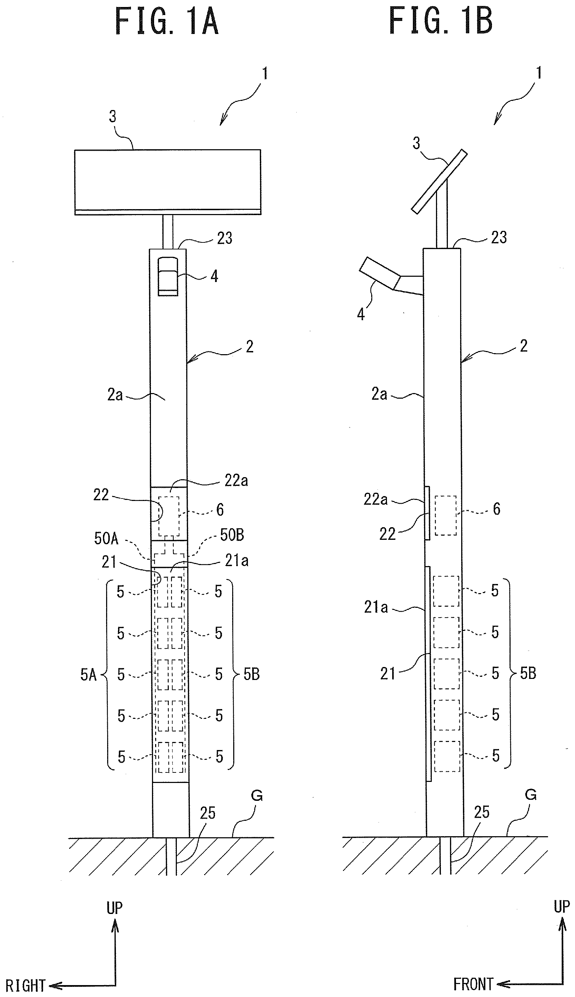

As illustrated in Figure 1, the present example is described by using an electric storage device used for a solar streetlight installed outside as an example.

### (Configuration of solar streetlight)

A solar streetlight 1 as a streetlight includes a columnar member 2, a solar panel 3, an illumination device 4 as a predetermined load, a plurality of battery packs 5, and a control device 6. The solar streetlight 1 is installed on a ground G.

Hereinafter, based on the columnar member 2, the illumination device 4 side is defined as "front," the opposite side thereof is defined as "back," when viewing the front side from the back side, the left side is defined as "left," the right side is defined as "right," and the upper side is defined as "up." Of the side surfaces of the columnar member 2, a side surface on which the illumination device 4 is installed is the front side of the solar streetlight 1.

The columnar member 2 is formed of a square pole, and is formed in a hollow shape having a space on the inside. The columnar member 2 can also adopt shapes other than the square pole, such as a prism or a cylinder. As will be described later, a plurality of battery packs 5 capable of supplying electricity to the illumination device 4 and the control device 6 are installed inside the columnar member 2.

The control device 6 is disposed above the plurality of battery packs 5 inside the columnar member 2. A first opening 21 and a second opening 22 located above the first opening 21 are formed on a side surface 2a on the front side of the columnar member 2.

The first opening 21 is provided in the installation position of the plurality of battery packs 5. The first opening 21 is used when performing work such as replacing the battery pack 5 and performing maintenance, for example, and is closed by a lid 21a when the work is not performed.

The second opening 22 is provided in the installation position of the control device 6. The second opening 22 is used when operating the control device 6 or performing maintenance work, for example, and is closed by a lid 22a when the operation and work are not performed.

In the present example, the installation area of the plurality of battery packs 5 inside the columnar member 2 is longer than the installation area of the control device 6 in the height direction of the columnar member 2, and therefore the first opening 21 is longer than the second opening 22 in the height direction.

A drainpipe 25 embedded below the ground G is connected to a bottom part of the columnar member 2. The drainpipe 25 is a pipe for draining moist that pools in the bottom part of the columnar member 2 to the underground as wastewater.

The solar panel 3 is attached to a top 23 of the columnar member 2. The solar panel 3 is formed of a photovoltaic module that generates electricity using optical energy from the sun, and is adjusted according to the installation location of the solar streetlight 1, so that the solar panel 3 is oriented to obtain the maximum amount of solar radiation throughout the year. The solar panel 3 is connected to the battery pack 5 and the control device 6 to be able to supply electricity thereto.

The illumination device 4 is disposed in an upper part of the side surface 2a on the front side of the columnar member 2, and shines a downward light from an upper part of the columnar member 2.

The battery pack 5 is a reused vehicle battery pack that had been mounted on a vehicle. In the present example, in order to reuse battery packs with a small capacity used in hybrid vehicles, a plurality of battery packs 5 are combined to increase the capacity for use.

In the case of reused battery packs 5, performance varies due to different capacities and degrees of deterioration in internal resistance and the like depending on the usage history. Since the remaining life differs among the plurality of combined battery packs 5, there is a high possibility that the battery pack 5 will need to be replaced during use. In the present example, by arranging the plurality of battery packs 5 inside the columnar member 2 as described above, even when an anomaly occurs in some battery packs 5, operation as a streetlight can be assured by the remaining battery packs 5.

The battery pack 5 is formed in a rectangular parallelepiped shape in which a side in the vertical direction is shorter than a side in the horizontal direction when placed in the transverse direction. "Placed in the transverse direction" refers to how the battery pack 5 is placed when mounted on a vehicle, and is how the battery pack 5 is placed so that its thickness is minimized.

In the present example, the battery pack 5 is mounted so as to be placed in the vertical direction inside the columnar member 2. Moreover, in the present example, the vertically placed plurality of battery packs 5 are arranged to align in the up-down direction inside the columnar member 2.

The plurality of battery packs 5 arranged in the up-down direction inside the columnar member 2 form a battery pack group. In the present example, five battery packs 5 arranged in the up-down direction form one battery pack group. The number of battery packs 5 included in a battery pack group is arbitrary, and is not limited to five.

Moreover, in the present example, two rows of the battery pack groups are provided inside the columnar member 2. Of the two rows of battery pack groups, one is referred to as a battery pack group 5A, and the other is referred to as a battery pack group 5B. The number of rows of the battery pack groups provided inside the columnar member 2 is not limited to two, and may be one, or three or more, for example.

The battery packs 5 of the same battery pack group are connected to the same wiring. Specifically, the five battery packs 5 included in the battery pack group 5A are connected to wiring 50A, and the five battery packs 5 included in the battery pack group 5B are connected to wiring 50B.

The wiring 50A and the wiring 50B are routed in the up-down direction inside the columnar member 2.

A positive terminal 60 and a power supply terminal 63 described later of each battery pack 5, the solar panel 3, the illumination device 4, the control device 6, and the like of the corresponding battery pack group are connected to each of the wiring 50A and the wiring 50B.

The battery pack group 5A and the battery pack group 5B form different battery pack group systems, and can function independently. For this reason, even when a trouble occurs in one system, the battery pack can be operated by the other system in which no trouble has occurred.

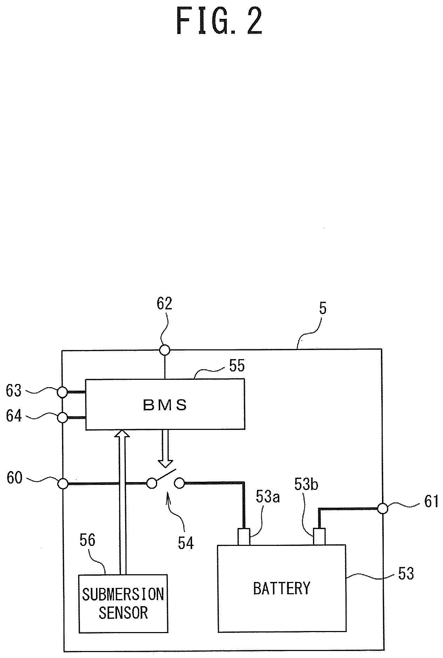

The control device 6 is connected to a battery management system (BMS) 55 (see Figure 2) described later in the battery pack 5, and controls the plurality of battery packs 5 via the BMS 55. The control device 6 exchanges information with the BMS 55 through communication.

The control device 6 is formed of a computer unit including a central processing unit (CPU), a random access memory (RAM), a read only memory (ROM), an input port, and an output port. A program for causing the computer unit to function as the control device 6 is stored, together with various constants and the like, in the ROM of the computer unit. That is, the CPU executing the program stored in the ROM by using the RAM as a work area causes the computer unit to function as the control device 6 of the present example.

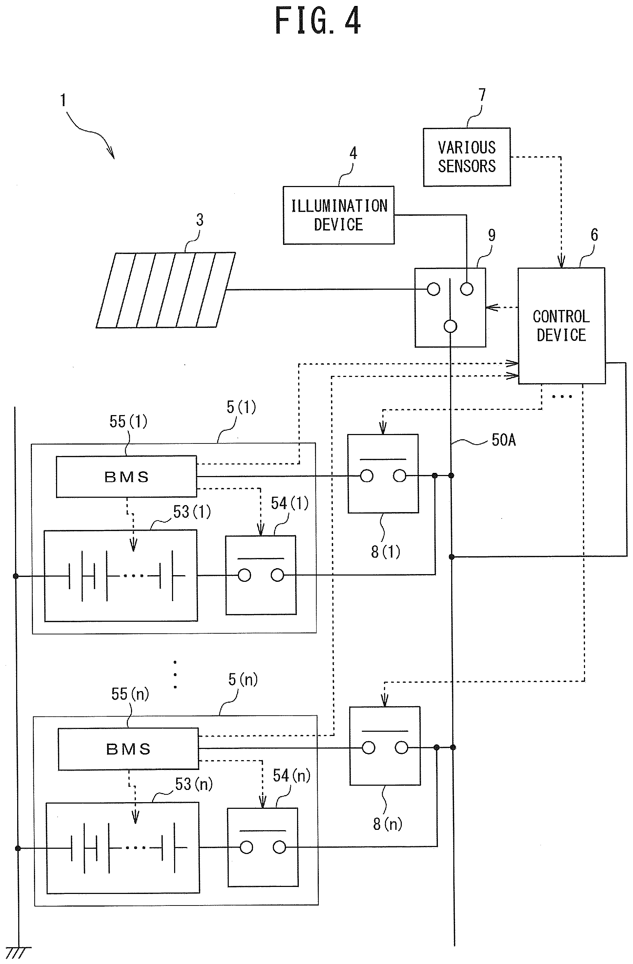

Various sensors 7 (see Figure 4) are connected to the control device 6. For example, sensors capable of detecting a change in the external environment such as an illumination sensor are connected to the control device 6. The control device 6 may include a timer that manages the lighting duration and lighting time. A configuration of the control device 6 will be described in detail later.

### (Electric configuration of battery pack)

Next, the electric configuration of the battery pack 5 of the present example will be described with reference to Figure 2.

As illustrated in Figure 2, the battery pack 5 includes a battery 53, a relay 54, a BMS 55, and a submersion sensor 56. The battery 53, the relay 54, the BMS 55, and the submersion sensor 56 are provided inside the battery pack 5.

The battery 53 is formed of a chargeable and dischargeable secondary battery such as a lithium ion battery. The battery 53 has a positive electrode 53a and a negative electrode 53b.

The positive electrode 53a of the battery 53 is connected to the positive terminal 60 via the relay 54 so as to be electrically conductive. The positive terminal 60 is a terminal that outputs the voltage of the battery 53 to the outside of the battery pack 5, and is exposed to the outside of the battery pack 5. The negative electrode 53b of the battery 53 is connected to a case of the battery pack 5 via a ground terminal 61.

The relay 54 is a switch that is provided between the positive electrode 53a of the battery 53 and the positive terminal 60, and is capable of switching between a connected state in which the positive electrode 53a of the battery 53 and the positive terminal 60 are connected and a disconnected state in which the two are disconnected.

The relay 54 is switched to the disconnected state when submersion of the battery pack 5 is detected by the submersion sensor 56.

The BMS 55 monitors and manages states of the battery 53 such as the voltage value and the state of charge (SOC) of the battery 53. The BMS 55 calculates the SOC on the basis of the charging and discharging current of the battery 53. The BMS 55 controls switching between the connected state and disconnected state of the relay 54.

The BMS 55 is connected to the control device 6 through a communication terminal 62 provided in the battery pack 5. The BMS 55 is connected to the power supply via the power supply terminal 63 and a power supply GND terminal 64 provided in the battery pack 5. In the present example, the battery 53 and the solar panel 3 are used as the power supply.

The submersion sensor 56 is a sensor that detects submersion of the battery pack 5. Various submersion sensors such as a sensor that detects submersion by sensing hydraulic pressure of a predetermined pressure or greater indicating submersion, a sensor that detects submersion when positive and negative terminals are submerged in water and there is continuity between the terminals, or the like can be used as the submersion sensor 56.

Here, the battery pack 5 is installed in the vertical direction inside the columnar member 2 to be oriented so that the positive terminal 60 is located above the submersion sensor 56. As a result, the positive terminal 60 is located above the submersion sensor 56.

### (Configuration of control device)

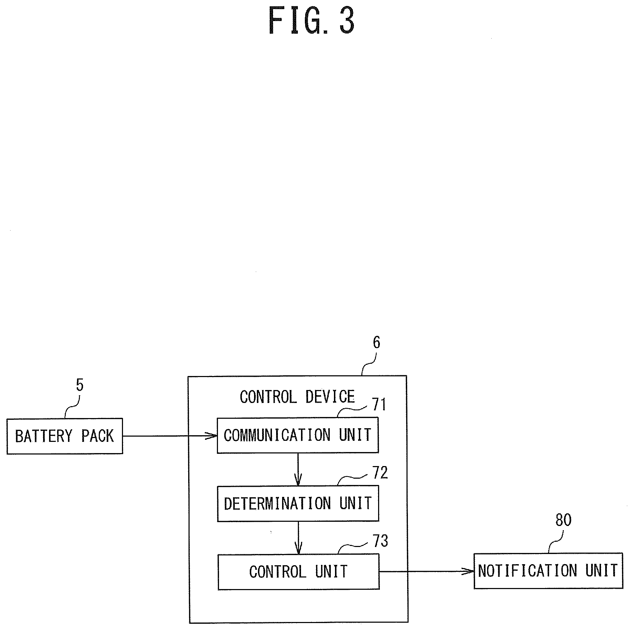

Next, a configuration of the control device 6 of the present example will be described with reference to Figure 3.

As illustrated in Figure 3, the control device 6 has a function as a communication unit 71 that receives information indicating submersion from the submersion sensor 56 in each battery pack 5. The control device 6 has a function as a determination unit 72 that determines the degree of immersion on the basis of which of the submersion sensors 56 in the battery packs 5 having transmitted the received information indicating submersion.

Here, the ROM of the control device 6 stores, for each battery pack 5, the height from the ground G to the installation position of the battery pack 5 as height information. The control device 6 can identify the battery pack 5 including the submersion sensor 56 from which the information indicating submersion has been received, and determine the degree of immersion by referring to the height information of the identified battery pack 5. That is, the control device 6 can determine up to what height (how many meters) the solar streetlight 1 is immersed in water.

The control device 6 has a function as a control unit 73 that controls a notification unit 80 described later to give notification of immersion degree information indicating the degree of immersion determined by the determination unit 72 to the outside. Immersion degree information is information indicating the immersion height of the solar streetlight 1 in its installation location.

The notification unit 80 that gives notification of information regarding immersion to the outside is connected to the control device 6. The notification unit 80 is formed of an analog, digital, or another-type indicator, and is provided on an outer surface of the columnar member 2. With this configuration, the control device 6 can display the immersion height of the solar streetlight 1 in its installation location on the indicator.

The outer surface of the columnar member 2 on which the notification unit 80 is provided is preferably the side surface 2a on the front side of the columnar member 2, for example. In this case, in order for the notification unit 80 to give notification to a wider area, it is desirable that the notification unit 80 be provided in an upper part of the side surface 2a on the front side of the columnar member 2.

### (Electrical connection of solar streetlight)

Next, the electrical connection of the solar streetlight 1 of the present example will be described with reference to Figure 4.

As illustrated in Figure 4, one to n (n = 5 in present example) battery packs 5 are provided in the solar streetlight 1 according to the present example. In the present example, in order to distinguish among the plurality of battery packs 5, the plurality of battery packs 5 are denoted by battery packs 5(1) to 5(n). When referring to one battery pack without specifying which of the battery packs 5(1) to 5(n), the battery pack is simply referred to as the "battery pack 5."

In Figure 4, the battery pack 5 of the battery pack group 5A connected to the wiring 50A is illustrated as an example of the battery packs 5(1) to 5(n). Hence, the wiring 50B and the battery pack group 5B are omitted from Figure 4.

The battery packs 5(1) to 5(n) are connected in parallel to each other with respect to the wiring 50A.

In the present example, to identify which of the battery packs 5(1) to 5(n) the battery 53, the relay 54, and the BMS 55 belong to, the batteries 53, the relays 54, and the BMSs 55 corresponding to the battery packs 5(1) to 5(n) are denoted by batteries 53(1) to 53(n), relays 54(1) to 54(n), and BMSs 55(1) to 55(n). Regarding the batteries 53(1) to 53(n), the relays 54(1) to 54(n), and the BMSs 55(1) to 55(n), when referring to one battery, relay, and BMS without specifying which of the battery packs 5(1) to 5(n) the components belong to, the components are simply referred to as the "battery 53," the "relay 54," and the "BMS 55."

A first switch 8 capable of switching between an ON state in which the BMS 55 and the wiring 50A are connected and an OFF state in which the two are disconnected is provided between the BMS 55 and the wiring 50A. At least one first switch 8 is provided for each BMS 55. While the present example describes an example in which one first switch 8 is provided for each BMS 55, two or more first switches 8 may be provided for each BMS 55.

In the present example, to identify which of the BMSs 55(1) to 55(n) the first switch 8 belongs to, the first switches 8 corresponding to the BMSs 55(1) to 55(n) are denoted by first switches 8(1) to 8(n). Regarding the first switches 8(1) to 8(n), when referring to one switch without specifying which of the BMSs 55(1) to 55(n) the switch belongs to, the switch is simply referred to as the "first switch 8."

The control device 6 controls the switching between the ON state and the OFF state of the first switch 8.

A second switch 9 is connected to one end of the wiring 50A. The second switch 9 is a switch that is provided between the wiring 50A, and the solar panel 3 and illumination device 4, and is capable of switching between an ON state in which the wiring 50A and the solar panel 3 or illumination device 4 are connected and an OFF state in which the two are disconnected.

That is, the second switch 9 is capable of switching between an ON state which is either a power generation-ON state connecting the wiring 50A and the solar panel 3 or a discharge-ON state connecting the wiring 50A and the illumination device 4, and an OFF state not connecting the wiring 50A with any of the solar panel 3 and the illumination device 4.

The control device 6 controls the switching between the power generation-ON state or discharge-ON state and the OFF state of the second switch 9. In a state where the power of the control device 6 is not turned on, such as at the time of initial startup of the solar streetlight 1, from the viewpoint of ensuring electricity for starting the solar streetlight 1, it is preferable that the second switch 9 be switched to the power generation-ON state.

The control device 6 is connected to the wiring 50A, and receives supply of electricity from at least one of the solar panel 3 and the battery packs 5(1) to 5(n) via the wiring 50A. The control device 6 controls switching between the ON state and the OFF state of the first switch 8 and the second switch 9.

In the present example, the battery packs 5 are arranged from top to bottom in the order of the battery packs 5(1) to 5(n) inside the columnar member 2. The first switch 8 is arranged above the relay 54.

### (Operation of solar streetlight)

Next, an operation of the solar streetlight 1 when an installation location of the solar streetlight 1 is flooded will be described. In the solar streetlight 1 configured as described above, when an installation location of the solar streetlight 1 is flooded, the following operation is performed.

For example, when the submersion sensor 56 of the battery pack 5(n) detects submersion in a state where the battery pack 5(n) is supplying electricity, the first switch 8(n-1) of the battery pack 5(n-1) arranged immediately above the battery pack 5(n) is switched to the ON state.

After the first switch 8(n-1) is switched to the ON state, the relay 54(n-1) is switched to the connected state. Thereafter, the relay 54(n) of the battery pack 5(n) is switched to the disconnected state.

When the relay 54(n) is switched to the disconnected state, the first switch 8(n) is switched to the OFF state.

By operating the solar streetlight 1 in the above procedure, it is possible to prevent interruption of the electricity supply from the battery pack 5. Additionally, even when some battery packs 5 are submerged in water, the remaining battery packs 5 can be used to continue lighting by the illumination device 4.

The control device 6 is installed above the uppermost battery pack 5(1), and therefore can maintain the electricity supply from the battery pack 5 and continue lighting by the illumination device 4 until all of the battery packs 5 are submerged in water.

Additionally, as described above, when the installation location of the solar streetlight 1 is flooded, the submersion sensors 56 in the battery packs 5 are sequentially activated from the lowermost battery pack 5 to the uppermost battery pack 5 installed inside the columnar member 2.

In this case, as described above, since the control device 6 is installed above the battery pack 5, the control device 6 is able to operate as long as the control device 6 is not submerged in water even when all the battery packs 5 are submerged in water. Accordingly, the control device 6 can grasp whether or not all of the battery packs 5 are submerged in water.

On the basis of height information of the battery pack 5 from which information indicating submersion is received, the control device 6 determines up to what height (how many meters) the solar streetlight 1 is immersed in water, and gives notification of immersion degree information to the outside via the notification unit 80.

When receiving information indicating submersion from the submersion sensor 56 of a certain battery pack 5 among the plurality of battery packs 5 belonging to the same battery pack group, if information indicating submersion is not received from the submersion sensor 56 of the battery pack 5 lower than the battery pack 5 that has detected submersion, the control device 6 determines that an anomaly has occurred in the submersion sensor 56 that has transmitted the information indicating submersion.

Note that the control device 6 may determine whether the submersion sensor 56 having transmitted the information indicating submersion is normal or abnormal by a majority rule regarding the state of reception from submersion sensors 56 including the submersion sensors 56 of the battery packs 5 lower than the battery pack 5 that has detected submersion.

When receiving information indicating submersion from the submersion sensor 56 of a certain battery pack 5 belonging to one battery pack group among a plurality of battery pack groups, if no information indicating submersion has been received from the battery pack 5 belonging to another battery pack group at the same height as the battery pack 5 that has detected submersion, the control device 6 determines that an anomaly has occurred in the submersion sensor 56 that has transmitted the information indicating submersion.

Note that the control device 6 may determine whether the submersion sensor 56 having transmitted the information indicating submersion is normal or abnormal by a majority rule regarding the state of reception from submersion sensors 56 including the submersion sensors 56 of the battery packs 5 at the same height as the battery pack 5 that has detected submersion but belonging to another battery pack group.

As has been described, in the electric storage device according to the present example, the control device 6 determines the degree of immersion on the basis of which submersion sensor 56 has transmitted information indicating submersion, and controls the notification unit 80 to give notification of immersion degree information indicating the determined immersion degree to the outside. Thus, the electric storage device can give notification of immersion information to the outside.

In the electric storage device according to the present example, since the notification unit 80 is an indicator provided on the side surface 2a on the front side of the columnar member 2, it is possible to give notification of the immersion degree information to the outside, such as to the periphery of the solar streetlight 1, by the solar streetlight 1 alone. For this reason, it is possible to warn a driver of a vehicle present in the periphery of the solar streetlight 1 not to enter an area near the flooded installation location of the solar streetlight 1.

Note that while the notification unit 80 is formed of an indicator in the present example, the invention is not limited thereto, and the notification unit 80 may be formed of the illumination device 4. In this case, it is possible to notify a driver of a vehicle present in the periphery of the solar streetlight 1 of the flooded state by a blinking pattern or blinking cycle of the illumination device 4. For example, the control device 6 shortens the blinking cycle when many battery packs 5 have detected submersion. Alternatively, at the time of a flood, the illumination device 4 may be lit in a color other than the illumination color used as lighting at times other than a flood. Moreover, a red light, for example, may be provided in the illumination device 4, and the red light may be lit to give notification of the flooded state. By forming the notification unit 80 by the illumination device 4 as described above, immersion degree information can be notified using the illumination device 4, so that no separate indicator is required, and the configuration can be simplified.

Alternatively, the notification unit 80 may be formed of a communication device that transmits immersion degree information to the outside. In this case, it is possible to notify a facility that needs to monitor the flooded state from a location away the solar streetlight 1 of the flooded state around the installation location of the solar streetlight 1, and promptly report the flooded state to the local government or the like. The local government or the like can promptly take necessary measures against the flood.

Alternatively, the notification unit 80 may have, in addition to an indicator, a function as a communication device that transmits immersion degree information to the outside. In this case, it is possible to also give notification of the flooded state to areas other than the periphery of the solar streetlight 1.

### [Reference Signs List]

- 1: solar streetlight (streetlight)
- 2: columnar member
- 2a: side surface (outer surface)
- 3: solar panel
- 4: illumination device (predetermined load)
- 5: battery pack
- 5A, 5B: battery pack group
- 6: control device
- 21: first opening
- 22: second opening
- 23: top
- 25: drainpipe
- 50A, 50B: wiring
- 53: battery
- 53a: positive electrode
- 53b: negative electrode
- 54: relay
- 55: BMS
- 56: submersion sensor
- 60: positive terminal
- 61: ground terminal
- 71: communication unit
- 72: determination unit
- 73: control unit
- 80: notification unit
- G: ground

## Claims

1. An electric storage device comprising:
a plurality of battery packs (5) configured to be capable of supplying electricity to a predetermined load (4), and installed to align in an up-down direction inside a columnar member (2);
a control device (6) configured to be arranged above the battery packs (5) and configured to control the battery packs (5);
a submersion sensor (56) configured to be provided in each of the plurality of battery packs (5); and
a notification unit (80) configured to give notification of information regarding immersion to the outside, the electric storage device being **characterized in that**
the control device (6) includes:
a communication unit (71) configured to receive information indicating submersion from the submersion sensor (56) in each battery pack (5),
a determination unit (72) configured to determine a degree of immersion on a basis of which of the submersion sensors (56) having transmitted the received information indicating submersion, and
a control unit (73) configured to control the notification unit (80) to give notification of immersion degree information indicating the degree of immersion determined by the determination unit (72) to the outside, wherein
the predetermined load (4) is an illumination device (4) used for a streetlight and the notification unit (80) is formed of the illumination device (4) provided on an outer surface (2a) of the columnar member (2).

2. The electric storage device as claimed in claim 1, wherein
the notification unit (80) has, in addition to the illumination device (4), a function as a communication device that transmits the immersion degree information to the outside.

3. The electric storage device as claimed in claim 1 or 2, wherein
the battery pack (5) is a reused on-vehicle battery pack.

## Patentansprüche

1. Elektrische Speicherungsvorrichtung, umfassend:
eine Mehrzahl von Batteriepacks (5), welche dazu eingerichtet sind, in der Lage zu sein, Elektrizität an eine vorbestimmte Last (4) zu liefern, und welche installiert sind, um in einer Oben-Unten-Richtung in einem säulenartigen Element (2) ausgerichtet zu sein;
eine Steuerungsvorrichtung (6), welche dazu eingerichtet ist, oberhalb der Batteriepacks (5) angeordnet zu sein, und welche dazu eingerichtet ist, die Batteriepacks (5) zu steuern;
einen Eintauchsensor (56), welcher dazu eingerichtet ist, in jedem aus der Mehrzahl von Batteriepacks (5) bereitgestellt zu sein; und
eine Meldungseinheit (80), welche dazu eingerichtet ist, eine Meldung von Informationen bezüglich einer Immersion nach außen zu geben, wobei die elektrische Speicherungsvorrichtung **dadurch gekennzeichnet ist, dass**
die Steuerungsvorrichtung (6) umfasst:
eine Kommunikationseinheit (71), welche dazu eingerichtet ist, Informationen, welche ein Eintauchen anzeigen, von dem Eintauchsensor (56) in jedem Batteriepack (5) zu empfangen,
eine Bestimmungseinheit (72), welche dazu eingerichtet ist, ein Maß an Immersion auf einer Grundlage von welche der Eintauchsensoren (56) die empfangenen Informationen, welche ein Eintauchen anzeigen, übermittelt haben, zu bestimmen, und
eine Steuerungseinheit (73), welche dazu eingerichtet ist, die Meldungseinheit (80) zu steuern, um eine Meldung von Immersionsmaß-Informationen, welche das Maß an Immersion anzeigen, welche durch die Bestimmungseinheit (72) bestimmt ist, zu der Außenseite zu geben, wobei
die vorbestimmte Last (4), eine Beleuchtungsvorrichtung (4) ist, welche für eine Straßenlaterne verwendet ist und
die Mitteilungseinheit (80) durch die Beleuchtungsvorrichtung (4) gebildet ist, welche an einer äußeren Fläche (2a) des säulenartigen Elements (2) bereitgestellt ist.

2. Elektrische Speicherungsvorrichtung, nach Anspruch 1, wobei
die Meldungseinheit (80), zusätzlich zu der Beleuchtungsvorrichtung (4), eine Funktion als eine Kommunikationsvorrichtung aufweist, welche die Immersionsmaß-Informationen an die Außenseite überträgt.

3. Elektrische Speicherungsvorrichtung, nach Anspruch 1 oder 2, wobei der Batteriepack (5) ein wiederverwendetes An-Fahrzeug-Batteriepack ist.

## Revendications

1. Dispositif de stockage électrique comprenant :
une pluralité de blocs-batteries (5) configurés pour être aptes à alimenter en électricité une charge prédéterminée (4), et installés pour s'aligner dans une direction de haut en bas à l'intérieur d'un élément en colonne (2) ;
un dispositif de commande (6) configuré pour être agencé au-dessus des blocs-batteries (5) et configuré pour commander les blocs-batteries (5) ;
un capteur de submersion (56) configuré pour être disposé dans chacun de la pluralité de blocs-batteries (5) ; et
une unité de notification (80) configurée pour notifier des informations concernant l'immersion vers l'extérieur, le dispositif de stockage électrique étant **caractérisé en ce que**
le dispositif de commande (6) comporte :
une unité de communication (71) configurée pour recevoir des informations indiquant une submersion en provenance du capteur de submersion (56) dans chaque bloc-batterie (5),
une unité de détermination (72) configurée pour déterminer un degré d'immersion sur une base duquel les capteurs de submersion (56) ont transmis les informations indiquant une submersion reçues, et
une unité de commande (73) configurée pour commander l'unité de notification (80) pour notifier des informations de degré d'immersion indiquant le degré d'immersion déterminé par l'unité de détermination (72) vers l'extérieur, dans lequel
la charge prédéterminée (4) est un dispositif d'éclairage (4) utilisé pour un lampadaire et
l'unité de notification (80) est formée du dispositif d'éclairage (4) disposé sur une surface externe (2a) de l'élément en colonne (2).

2. Dispositif de stockage électrique selon la revendication 1, dans lequel
l'unité de notification (80) présente, en plus du dispositif d'éclairage (4), une fonction de dispositif de communication qui transmet les informations de degré d'immersion vers l'extérieur.

3. Dispositif de stockage électrique selon la revendication 1 ou 2, dans lequel le bloc-batterie (5) est un bloc-batterie embarqué réutilisé.
